# EUROPEAN PATENT SPECIFICATION

(11) **EP 4 687 494 B1**
(45) Date of publication and mention of the grant of the patent: **02.12.2026**
(21) Application number: 24715800.9
(22) Date of filing: 28.03.2024
(51) Int. Cl.: A23L 33/00, A23C 9/20, A61P 3/04

(54) **LOW CALORY INFANT NUTRITION**
BABYNAHRUNG MIT NIEDRIGEM KALORIEGEHALT
NUTRITION INFANTILE A FAIBLE TENEUR EN CALORIES

(30) Priority: 29.03.2023 EP 23165150
(43) Date of publication of application: 11.02.2026
(73) Proprietor: FrieslandCampina Nederland B.V., 3818 LE Amersfoort (NL)
(72) Inventor: BONGERS, Cornelis Margaretha Theodorus Maria, 6708 WH Wageningen (NL); TIMMER-KEETELS, Christina Josephina Antonia Maria, 6708 WH Wageningen (NL); GEURTS, Johannes Marie Wilhelmus, 6708 WH Wageningen (NL)
(74) Representative: FrieslandCampina IP Department
(86) International application number: PCT/EP2024/058592
(87) International publication number: WO 2024/200714

(56) References cited:
- CN-A- 103 781 370
- US-A1- 2009 175 979
- US-A1- 2010 075 900
- US-A1- 2014 010 912
- US-A1- 2014 308 393
- US-A1- 2015 011 498
- US-A1- 2017 000 181

## Description

This invention relates to a synthetic nutritional composition. In particular, the invention relates to a synthetic nutritional composition comprising a protein fraction, a fat fraction and a carbohydrate fraction wherein the nutritional composition is a liquid or a powder that may be reconstituted with water into an oil-in-water emulsion, wherein the nutritional composition is for infants weighing 3.0 kg or more, has an energy content per 100 ml of less than 48 kcal per 100 ml and a carbohydrate content per 100 ml of 6.2 g or higher in its ready-to-drink form, and to an age-tailored nutritional system for an infant from birth to 6 months comprising such composition.

Further, the invention relates to the use of such compositions in the prevention of obesity and/or improving the body composition. In addition the nutritional compositions of the invention may be used in a method of feeding a human subject comprising the step of administering a nutritional composition according to the invention. The invention also relates to a process for the manufacture of a nutritional composition according to the invention.

### Technical Background

Breast feeding is the best way to ensure healthy growth and development of infants during the first months of life. It is recommended by the WHO to exclusively provide breast feeding during the first six months of life and the introduction of safe and appropriate complementary feeding thereafter to supplement continued breast feeding up to two years of age or beyond. However, when mothers cannot or choose not to breastfeed for whatever reason a safe alternative to breast feeding is required. There is a legitimate role for breast milk substitutes, produced according to strict international compositional and safety standards such as e.g. codex alimentarius, EU Commission Directive 2006/141/EC, USA FDA, or Chinese standard GB 10765 - 2021 (the National Food Safety - Infant Formula).

When the Sustainable Development Goals (SDGs) were approved in 2015 by the United Nations General Assembly they were seen as a great triumph of integrated goals, albeit quite ambitious. The 17 goals are together intended to form an integrated, holistic roadmap to a better world, supported by 169 specific, measurable targets on everything from water to education and food to health, to be achieved by 2030. But a key omission appears to be any reference to obesity, despite the fact that over 1.9 billion adults have overweight or obesity worldwide. It is noted that obesity is playing a role in major health and development issues. It is shown that obesity is a relevant and essential component of the global development agenda and must be prioritized to successfully achieve targets related to non-communicable disease mortality (J. Ralston et al Current Obesity Reports (2021) 10:54-60 https://doi.org/10.1007/ s13679-020-00420-y).

Obesity in humans is often attributed to a Western lifestyle, a high-fat diet and decreased activity. While these factors certainly contribute to adult obesity, compelling data indicates that this explanation is oversimplified. Recent studies strongly argue that maternal/foetal under- or overnutrition predisposes the offspring to become hyperphagic and increases the risk of later obesity. The behavioural susceptibility theory (BST) proposes that individuals who inherit a more avid appetite or lower sensitivity to satiety are more likely to overeat in response to the food environment. BST suggests that appetite is influenced by metabolic factors, genes, environment and social factors which together may result in a positive energy imbalance resulting in increased body weight. Other data supports a prevailing view that all babies are born with perfect appetite control and that responsive feeding results in a healthy growth of an infant. Rapid weight gain during the first two years of life may be caused by non-responsive feeding (C. Llewellyn and J. Wardle, Physiology & Behavior 152 (2015) 494-501; http://dx.doi.org/10.1016/ j.physbeh.2015.07.006)

It has been known for some time that the composition of human milk changes from colostrum to late lactation, and varies within feeds, and diurnally.

Formula feeding advice is excluding drinking advice for infants 0-12 months old, especially 0-6 months old. During the first year of life, and especially during the first 6 months of life, all food consumed by an infant is consumed in the form of milk or infant formula with predetermined nutrient levels per 100 ml.

When drinking an infant formula product as the sole source of food and liquid, the infant is stuck to the fixed amount of nutrients received with a certain amount of liquid and vice versa. The inventors surprisingly found that infants need more water than received via the formula if they would stop drinking once received sufficient nutrients needed for normal growth and development. In need of more water, the infant will drink more formula product and thereby receive more nutrients than needed for normal growth and development (i.e. overfeeding) which leads to an increased weight during infancy and to adiposity programming. Especially the first 6 months of life are a critical window for such adiposity programming of appetite and satiety-regulating hormones that involve food intake regulation later in life (De Fluiter et al, European Journal of Nutrition (2021) 60:3717-3725).

There is a continuing need to develop infant formulas which will replicate human milk as far as possible in terms of its nutritional properties. There is thus a desire to prevent rapid weight gain during infancy and/or overfeeding during infancy.

All these problems would be partly or completely eliminated or overcome by decreasing the energy and/or nutrient content per 100ml of infant formula, especially during the first 1, 2, 3, and 4 months of life.

This would be against existing infant formula regulations such as those given in Codex where minimum and maximum amounts of nutrients per 100 kcal of infant formula are given and wherein the mean intake of prepared formula for infants from birth to six months of age is 750 ml per day (Codex Alimentarius - Standard for infant formula and formulas for special medical purposes intended for infants CXS 72-1981; Formerly CAC/RS 72-1972. Adopted as a worldwide Standard in 1981. Amended in 1983, 1985, 1987, 2011, 2015, 2016, 2020. Revised in 2007). The inventors surprisingly found that formula fed infants in tropical and non-tropical areas and irrespective of the month of birth have a water deficiency during the first 3 to 6 months of life when fed in accordance with standard instructions. Following this finding, the total amount of water intake per day should be re-considered, especially during the first months of life e.g. during the first 3 to 6 months, preferably the first 3 months of life. In addition, these findings could be used to re-consider the need for updating existing formula feeding advice.

Thus, this invention provides an infant nutrition product and an age-tailored nutritional system for different age groups comprising such product.

Formula nutrition for infants is well-known. Normally such formula products are staged on age of the child; stage 1 or starter formula for children of 0 to 6 months, stage 2 or follow-up or follow-on for 6 to 12 months and stage 3 or young child formula or growing up milk for 1 to 2 years. Other age-tailored nutritional systems for infants are known from WO2009/068549 which relates to the use of a protein source comprising whey and casein proteins for providing an age-tailored nutrition system to an infant which system comprises two infant formulas each appropriate to an infant of a different age and each comprising the protein source wherein the whey:casein ratio of each formula is chosen in the range from 100:0 to 40:60 and decreases according to the age of the infant and the protein content of each formula is chosen in the range from 1.5 to 3.0g protein/100 kcal and decreases according to the age of the infant. It also discloses a method of feeding an infant in the first six months of life comprising feeding to the infant for at least part of the first one to eight weeks of life a first infant formula having a protein source comprising whey and optionally casein proteins and having a whey:casein ratio between 100:0 and 60:40 and a protein content between 1.8 and 3.0g protein/100 kcal and feeding to the infant for at least part of the remainder of the first six months of life a second infant formula.

Nutritional compositions for infants having a low caloric content are known from e.g., US 2009/175979 A1 and US 2015/011498 A1.

### Summary of the Invention

In a first aspect the invention relates to a synthetic nutritional composition comprising a protein fraction, a fat fraction and a carbohydrate fraction wherein the nutritional composition is a liquid or a powder that may be reconstituted with water into an oil-in-water emulsion, wherein the nutritional composition in its ready-to-drink form has an energy content per 100 ml of less 48 kcal, most preferably less than 46 kcal, wherein the composition is
a) for infants weighing 3.0 kg or more; and
b) has a carbohydrate content in g/100 mL of 6.2 or higher.

In another aspect, the invention relates to an age-tailored nutrition system for an infant from birth to 6 months comprising two or more formula products wherein the first formula product is a nutritional composition according to the invention and wherein the first formula product is for feeding the infant for at least part of the first 3 months, preferably part of the first 2 months and the second formula product is for feeding the infant for at least part of the remainder of the 6 months and wherein the energy content of the second nutritional formula is higher than the energy content of the first nutritional product, preferably wherein the energy content of the second nutritional formula is 58 kcal per 100 ml or higher.

In a further aspect the invention relates to the composition or the age-tailored nutrition system of the invention for use in the prevention of obesity and/or reducing the risk of obesity later in life. In another aspect which is not part of the present invention as defined by the claims, is disclosed the composition or the age-tailored nutrition system of the invention for use in improving the body composition, the improvement of body composition being selected from one or more of the group consisting of increased lean body mass relative to total body mass, and decreased fat mass relative to total body weight. The improvement of the body-composition may be therapeutic and non-therapeutic. In another aspect, the invention relates to the composition or the age-tailored nutrition system of the invention being an anti-obesity composition. In yet another aspect, the composition of the invention or the age-tailored nutrition system of the invention may be used in improving the body composition, the improvement of body composition being selected from one or more of the group consisting of increased lean body mass relative to total body mass, and decreased fat mass relative to total body weight.

Not part of the present invention is disclosed a method of feeding a human subject comprising the step of administering a nutritional composition according to the invention, or comprising the step of administering the age-tailored nutrition system of the invention to the subject, preferably wherein the human subject is between 0 and 12 months old, more preferably wherein the subject is between 0-6 months old.

In still another aspect, the invention relates to a process for the manufacture of a nutritional composition according to the inventioncomprising the steps of
i. preparing an aqueous phase comprising protein and digestible carbohydrates and preparing a fat phase comprising lipids, wherein the fatty acid composition of the lipid comprises linoleic acid and alpha- linolenic acid in a weight ratio of 2 to 10,
ii. mixing the fat and aqueous phase and homogenizing the mixture of fat and aqueous phase into an oil-in- water emulsion
iii. optionally drying the oil-in-water emulsion of ii. into a powder.

### Description of the Figures

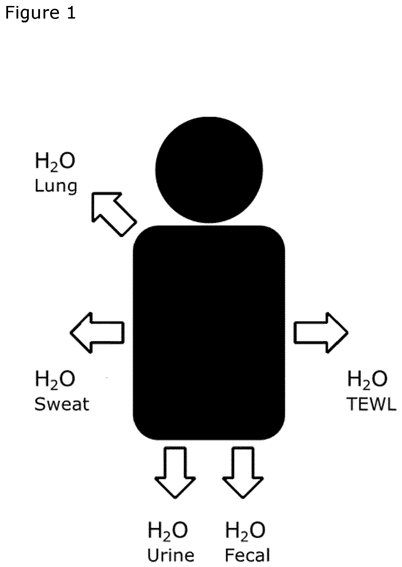

In Figure 1 a schematic overview of different pathways on how water is lost from an infant body, e.g. respiratory water loss (via the lungs, RespWL), Sweat water loss (SWL), Trans Epidermal water loss (TEWL), Renal water loss (urine, RWL) and fecal water loss (FWL). The water loss per day is the sum of these, i.e. of RespWL, SWL, TEWL, RWL, and FWL.

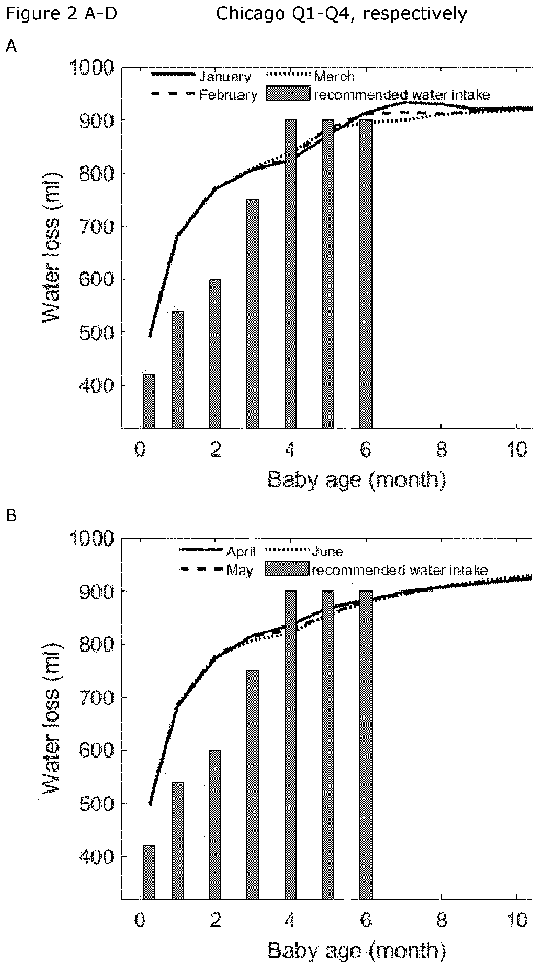

In Figure 2 A - D the daily water loss (in mL) is compared with the infant formula intake (mL per day) according to schedule for an infant different cities, born in different months of the year. Data for Chicago (USA), are shown in Figure 2 A - D, where each figure shows the recommended water intake (gray bar) per day (i.e. amount of ml of infant formula based on manufactures' instructions) and the water need, as determined based on the extended HumMod model. Figure 2A shows data for infants born in January, February and March, B) April, May, June, C) July, August, September and D) October, November and December.

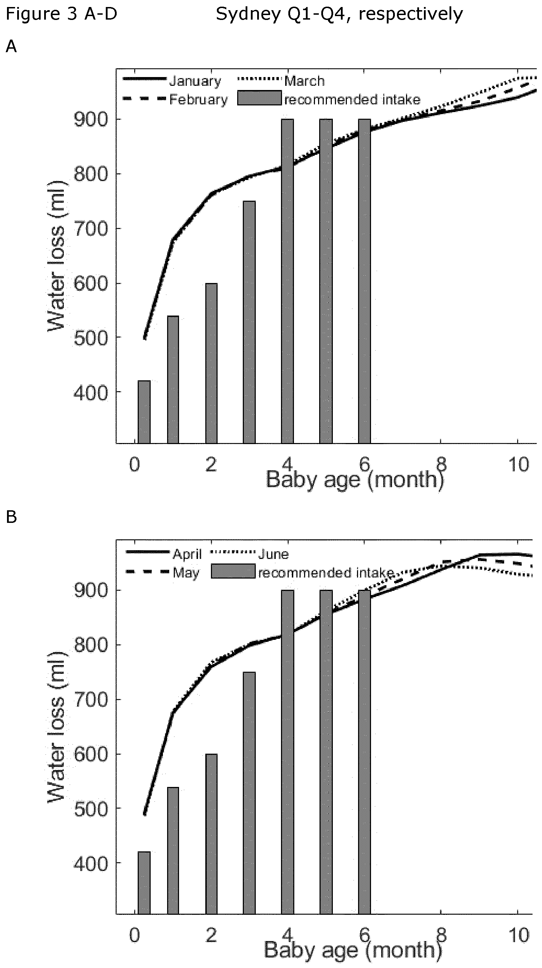

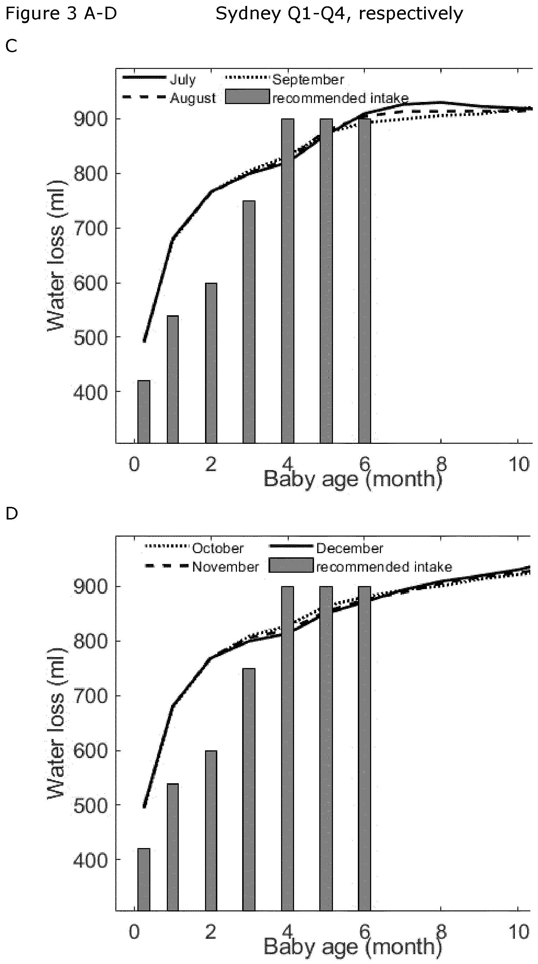

Similar data for Sydney (Autralia), are shown in Figure 3 A-D where A) shows data for month of birth January, February and March, B) for April, May, June, C) for July, August, September and D) for October, November and December.

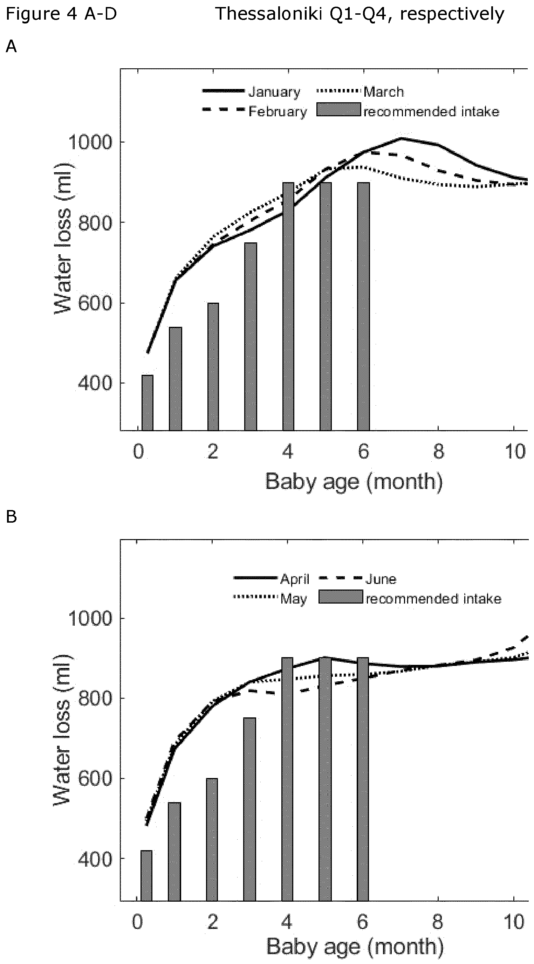

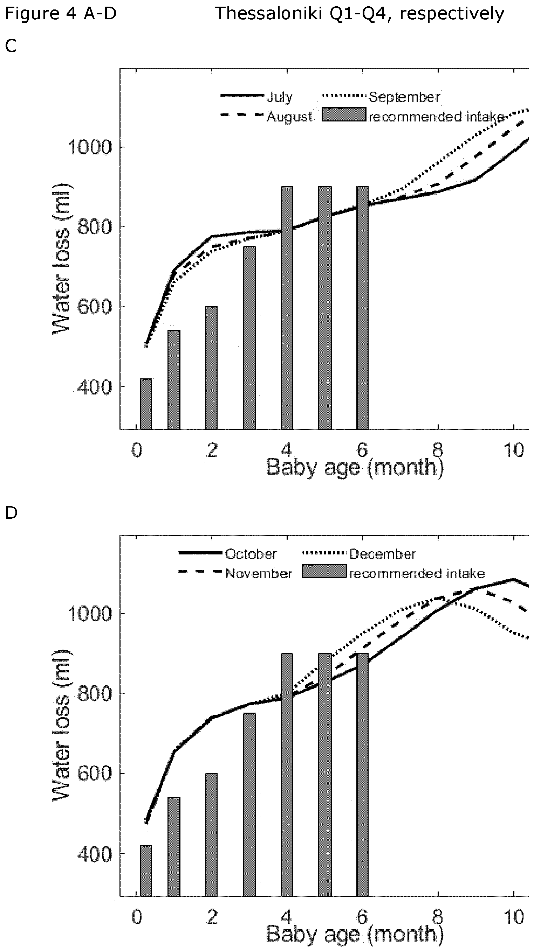

Data for Thessaloniki, are shown in Figure 4 A-D where A) shows data for month of birth January, February and March, B) for April, May, June, C) for July, August, September and D) for October, November and December.

### Definitions

As used herein the term "reconstituted beverage" relates to a drinkable product that is prepared by dissolving a powder in a liquid such as dissolving an infant formula in water in accordance with the manufacturer's instructions. The drinkable product preferably is drinkable by an infant using a bottle with a teat. Such bottles with teat are well-known and readily commercially available. The drinkable product preferably has a viscosity of less than 800 cP (at 25 °C and a pressure of 1 atmosphere) such as between 1 and 500 cP, preferably between 1 and 400 cP, more preferably between 1 and 200 cP.

A "formula product" as used herein refers to a product which upon reconstitution with a liquid, preferably with water, more preferably boiled water (which preferably is cooled to below 37 °C), provides a reconstituted drinkable product. Once the reconstituted beverage is consumed, its temperature should not be too high in order to avoid burning of the subject's tongue or mouth. Hence normally the temperature of the liquid should be 37 °C or below.

The formula product usually is a powder, although in some instances it may be a readily dissolvable tablet or cube. Alternatively, a formula product is a liquid which may have to be diluted or is "ready to drink". Examples of formula products include products that, optionally after reconstitution into a reconstituted beverage, provide a complete nutrition for a subject such as IFT products, Follow-on-Formula (FOF), and Young Child Formula (YCF-Jr) products. A formula product has a recommended dosage (i.e. amount) of formula product per subject per day; a recommended number of feeding moments per subject per day and a recommended ratio between the desired amount of the formula product and the desired amount of liquid. These recommendations may depend on the type and brand of formula and are provided by the manufacturer. The term "infant formula", also referred to as "infant formula product" as used herein refers to a nutritional composition intended for infants 0 to 6 months. It refers to a breast-milk substitute specially manufactured to satisfy, by itself, the nutritional requirements of infants during the first months of life up to the introduction of appropriate complementary feeding. The product is so processed and so packaged as to prevent contamination under all normal conditions of handling, storage and distribution. The energy content, carbohydrate content, fat content, and protein content are exemplified elsewhere herein. The composition of the invention compensates the risk of a too high energy intake during the first months of life by a lower energy level as compared to standard dietary recommendations e.g. as defined in the above-cited European Commission Directive, or in Codex Alimentarius, (Codex Alimentarius Standard For Infant Formula And Formulas For Special Medical Purposes Intended For Infants - STAN 72-1981).

The infant formula encompasses the starter infant formulas. Generally a starter formula is for infants from birth to 6 months as breast-milk substitute, and a follow-up or follow-on formula from the 6th month to 12 months. A young child formula is dedicated for children aged 1 - 3 years old.

The term "infant" means a child under the age of 12 months.

The term "young child" means a child aged between one and three years. The term "starter infant formula" means a foodstuff intended for particular nutritional use by infants during the first six months of life.

The term "nutritional composition" means a composition which nourishes a subject. This nutritional composition is usually to be taken orally, and it usually includes a lipid or fat source, a carbohydrate source and a protein source.

The term "synthetic composition" means a composition which is artificially prepared and is containing at least one compound that is produced ex vivo chemically and/or biologically and/or physically, e.g. by means of chemical reaction, enzymatic reaction or by a fractionation process. An example of such a fractionation process is a process wherein bovine milk is separated into different fractions like a fat and protein fraction. For the avoidance of doubt, a synthetic composition is not made in vivo by man or animal.

As used herein the term "reconstituted beverage" relates to a drinkable product that is prepared by dissolving a powder in a liquid such as dissolving an infant formula in water in accordance with the manufacturer's instructions.

The term "prebiotic" means non-digestible carbohydrates that beneficially affect the host by selectively stimulating the growth and/or the activity of healthy bacteria such as Bifidobacteria in the colon of humans (Gibson et al; Nutrition Research Reviews (2004), 17, 259-275).

The term "probiotic" means microbial cell preparations or components of microbial cells with a beneficial effect on the health or well-being of the host. (Salminen et al Trends in Food Science & Technology Volume 10, Issue 3, March 1999, Pages 107-110).

Renal solute load (RSL) refers to all solutes of endogenous or dietary origin that require excretion by the kidneys. Potential renal solute load (PRSL) refers to solutes of dietary origin that would need to be excreted in the urine if none were diverted into synthesis of new tissue and none were lost through nonrenal routes. $PRSL = N / 28 + Na + Cl + K + {P}_{a}$ where N is nitrogen, Na is sodium, Cl is chloride, K is potassium and Pₐ is available phosphorus, and the units are in millimoles (or milliosmoles), except for N, which is total N in mg. The term N/28 represents nitrogenous solutes (mmol) based on the assumption that the modal number of N atoms per molecule is 2, i.e. N is expressed in mmol of urea. Pₐ is equal to total P except in soy-based diets, in which Pₐ is about two-thirds of total P.

As used herein, FA is referring to Fatty Acid; SFA is referring to Saturated Fatty Acid and LC SFA is referring to Long Chain Saturated Fatty Acid. A long chain saturated fatty acid is referring to a saturated fatty acids with 12 carbon atoms or more.

The energy content of the composition of the invention is calculated using the Atwater general factor system. It uses a single factor for each of the energy-yielding substrates (protein, fat, carbohydrate). The energy values are 17 kJ/g (4.0 kcal/g) for protein, 37 kJ/g (9.0 kcal/g) for fat and 17 kJ/g (4.0 kcal/g) for digestible carbohydrates. Non-digestible carbohydrates like GOS, FOS, inulin have an energy value of 8 kJ/g (2.0 kcal/g).

It must also be noted that, as used in the specification and the appended claims, the singular form "a", "an," and "the" comprise plural referents unless the context clearly indicates otherwise. For example, reference to a component in the singular is intended to comprise a plurality of components.

It will be understood that within this disclosure, any reference to a weight, weight ratio, and the like pertains to the dry matter, in particular the dry matter of the composition, unless defined otherwise.

Unless defined otherwise, all technical and scientific terms used herein generally have the same meaning as commonly understood by one of ordinary skill in the art to which this invention belongs.

As used herein, the term "comprising", which is synonymous with "including" or "containing", is open-ended, and does not exclude additional, unrecited element(s), ingredient(s) or method step(s), whereas the term "consisting of" is a closed term, which excludes any additional element, step, or ingredient which is not explicitly recited.

Throughout this application, where publications are referenced, the disclosures of these publications in their entireties are hereby incorporated by reference into this application to more fully describe the state of the art to which this invention pertains.

Overweight and obesity are defined as abnormal or excessive fat accumulation that presents a risk to health. A body mass index (BMI) over 25 is considered overweight, and over 30 is obese. The BMI is expressed in kg/m² and is calculated by a person's weight in kilograms divided by the square of height in meters.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed; the first definition of an acronym or other abbreviation applies to all subsequent uses herein of the same abbreviation and applies, *mutatis mutandis,* to normal grammatical variations of the initially defined abbreviation; and, unless expressly stated to the contrary, measurement of a property is determined by the same technique as previously or later referenced for the same property.

### Details of the Invention

In a first aspect the invention relates to a synthetic nutritional composition comprising a protein fraction, a fat fraction and a carbohydrate fraction wherein the nutritional composition is a liquid or a powder that may be reconstituted with water into an oil-in-water emulsion, wherein the nutritional composition has an energy content per 100 ml of less 48 kcal, most preferably less than 46 kcal, wherein the composition is:
a) for infants weighing 3.0 kg or more; and
b) has a carbohydrate content in g/100 mL of 6.2 or higher.

In one embodiment, the nutritional composition of the invention has an energy content per 100 g of powder of less than 467 kcal, preferably less than 450 kcal, particularly preferably less than 442 kcal, more preferably less than 424 kcal, even more preferably less than 408 kcal, most preferably less than 390 kcal.

It will be understood that the energy contents e.g. in kcal per 100 ml, or other content level is referring to the level in the ready to drink product. Such ready to drink product may be obtained after reconstitution of a powdered synthetic nutritional product with water in accordance with manufacturer's instructions.

In one embodiment, the nutritional composition of the invention is a nutritional composition for term infants, preferably term infants not small for gestational age. According to the present invention, the nutritional composition of the invention is for infants weighing 3 kg or more.

In one embodiment, the nutritional composition of the invention has an energy content per 100 ml of less than 48 kcal per 100 ml and an energy content per 100 g of powder of less than 467 kcal, preferably less than 450 kcal, particularly preferably less than 442 kcal, more preferably less than 424 kcal, even more preferably less than 408 kcal, most preferably less than 390 kcal.

In another embodiment the nutritional composition has an energy content per 100 ml of less than 46 kcal per 100 ml and an energy content per 100 g of powder of less than 467 kcal, preferably less than 450 kcal, particularly preferably less than 442 kcal, more preferably less than 424 kcal, even more preferably less than 408 kcal, most preferably less than 390 kcal.

The Potential renal solute load (PRSL) of the composition of the invention should not be too high as that would lead to dehydration of the infant. A too low PRSL may lead to water intoxication. In one embodiment the PRSL of the composition of the invention is between 60 and 120 mOsm/100ml, preferably between 80 and 110 mOsm/100ml. Preferably, the PRSL of the composition of the invention is between 60 and 120 mOsm/100ml and the protein contribution to the PRSL is between 40 and 70, preferably between 45 and 65%. The protein contribution to the PRSL is the fraction of the total PRSL accounted for by protein.

The reduced energy level of the compositions of the invention may be obtained by reducing the fat content per 100 ml of formula of existing infant formulas or, alternatively by reducing the fat content and the protein content. Preferably the level of monovalent ions per 100 ml is the same as in standard formulas. More preferably the level of monovalent ions and the carbohydrate content per 100 ml is the same as in standard formulas.

The compositions of the invention may be prepared using methods known in the art of infant formula preparation.

The drinkable product preferably is drinkable by an infant using a bottle with a teat. Such bottles with teat are well-known and readily commercially available. The drinkable product preferably has a viscosity of less than 800 cP (at 25 °C and a pressure of 1 atmosphere) such as between 1 and 500 cP, preferably between 1 and 400 cP, more preferably between 1 and 200 cP. The viscosity of water is 1.0016 mPa· s at 20 °C. Briefly, the nutritional composition according to the invention may be prepared in a process comprising the steps of:
i. preparing an aqueous phase comprising protein and digestible carbohydrates and preparing a fat phase comprising lipids, wherein the fatty acid composition of the lipid comprises linoleic acid and alpha- linolenic acid in a weight ratio of 2 to 10,
ii. mixing the fat and aqueous phase and homogenizing the mixture of fat and aqueous phase into an oil-in- water emulsion
iii. optionally drying the oil-in-water emulsion of ii. into a powder.

Methods for preparing infant formula are known in the art, e.g. from US20040101596 A1 or EP0969728 A1. An exemplary method for preparing an age tailored powdered infant formula is as follows. A protein source, carbohydrate source, and fat source may be blended together in appropriate proportions. Emulsifiers maybe included in the blend. Vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The liquid mixture may then be thermally treated to reduce bacterial loads. For example, the liquid mixture may be rapidly heated to a temperature in the range of about 72°C to about 110°C for about 5 seconds to about 5 minutes. This can be carried out by a heat exchanger, for example a plate heat exchanger, optionally combined with steam injection. The liquid mixture may then be cooled to about 60°C to about 85°C; for example by flash cooling. The liquid mixture may then be homogenized; for example in two stages at about 7 M Pa to about 40 M Pa in the first stage and about 2 MPa to about 14 M Pa in the second stage. The homogenised mixture may then be further cooled to add any heat sensitive components such as vitamins and minerals. The pH and solids content of the homogenised mixture is conveniently standardised at this point. The homogenised mixture can be transferred to a suitable drying apparatus such as a spray drier or freeze drier and converted to powder. The powder should have a moisture content of less than about 3% by weight.

If it is desired probiotic(s) can be added, they may be cultured according to any suitable method and prepared for addition to the infant formula by freeze-drying or spray-drying for example. Alternatively, bacterial preparations can be bought from specialist suppliers such as Christian Hansen and Morinaga already prepared in a suitable form for addition to food products such as infant formula. Such bacterial preparations may be added to the age tailored powdered infant formula by dry mixing. Likewise, prebiotics and Human Milk Oligosaccharides (HMO) may be added to the formula by dry mixing. Prebiotics and HMOs can be bought from specialist suppliers like FrieslandCampina or others.

Examples of prebiotics include but are not limited to galacto oligosaccharides (GOS), inulin and fructo oligosaccharides (FOS) or combinations thereof. Examples of HMOs include but are not limited to 2'FL, 3FL, LNT, LNnT, 3'GL, 6'GL, 3SL, 6SL and combinations thereof. 2'Fucosyl lactose (2'FL ) being a preferred HMO.

In one embodiment the protein content in gram protein per 100 kcal in the composition of the invention is between 1.6 and 3.0; in another embodiment it is between 1.8 and 3.0, preferably between 2.0 and 2.9, more preferably between 2.0 and 2.5.

In one embodiment the protein fraction is comprising goat or bovine milk protein and the amount of goat or bovine milk protein in the protein fraction of the composition of the invention is more than 80 wt% as determined relative to the total amount of protein in the composition, preferably, the amount of protein is more than 90 wt%. In another embodiment, the amount of bovine milk protein in the protein fraction of the composition of the invention is more than 80 wt% as determined relative to the total amount of protein in the composition, preferably, the amount of bovine protein is more than 90 wt%. In yet another embodiment the amount of goat protein in the protein fraction of the composition of the invention is more than 80 wt% as determined relative to the total amount of protein in the composition, preferably, the amount of goat protein is more than 90 wt%.

The protein fraction may be a milk protein such as casein or whey, alternatively it is a vegetable protein like soy protein, rice protein.

Preferably it is a ruminant milk protein, more preferably from cow's milk, sheep milk, or goat milk, or a combination thereof, most preferably from cow's milk. WPC and SPC are well-known whey protein-comprising milk fractions. Both WPC and SPC are the result of separating skimmed milk into a casein-rich and a whey protein-rich fraction; either by renneting (i.e. cheese making), acidification, or microfiltration. In still another embodiment the the protein fraction comprises a mixture of whey and casein in a ratio of between 100:0 to 20:80, preferably a whey to casein ratio of between 70:30 and 20:80, more preferably a whey to casein ratio of between 70:30 and 50:50.

Whey protein concentrate (WPC) is a product obtained by ultrafiltration and optionally reverse osmosis, to further concentrate the product (water removal), and optionally combined demineralization of acid or cheese whey. By ultrafiltration, a large part of the water, lactose and ash are removed from the product, thereby concentrating the whey proteins. Serum protein concentrate (SPC) is also a concentrated protein product and differs from WPC in the origin of the whey fraction. Instead of acid or cheese whey, the proteins in SPC result from microfiltration of skimmed milk. Said microfiltration results in a concentrated casein retentate fraction and a serum fraction containing most of the whey proteins as the permeate fraction. Conventionally, this permeate fraction is then subjected to ultrafiltration and/or reverse osmosis in order to remove lactose, ash, and water. The product obtained may be demineralized, if so required.

In still another embodiment, the protein in the protein fraction of the composition of the invention is partially hydrolysed. This improves the digestibility of the composition. In one embodiment the protein fraction comprises at least 10 wt% of partially hydrolysed protein as determined to the total amount of protein. Hydrolysed protein suitable for the composition of the invention may be obtained using methods known in the art, for example via chemical hydrolysation or enzymatic hydrolysation, for example as disclosed in WO2006130204 or EP0922392. As used herein, the hydrolysed protein has a molar mass of 5000 Daltons or lower.

The fat fraction (also referred to as lipid fraction) in the synthetic composition of the invention may comprise different fats and oils, such as a vegetable oil, fish oil, ruminant milk fat or combinations thereof. Preferably the composition comprises ruminant milk fat, more preferably a combination of vegetable oils and ruminant milk fat. Even more preferably, this combination of lipids is supplemented with fish oil. Fat consists of a glyceride residue linked to a carboxylic acid via an ester bond. As such, a fat molecule comprises a glyceride residue and three fatty acid acyl groups. An acyl group linked to the first carbon of a glyceride is also referred to as an sn1 linked acyl group, like an acyl group linked to the second carbon of a glyceride is referred to as an sn2 linked acyl group and an acyl group linked to the third carbon of a glyceride is referred to as sn3 linked acyl group.

An acyl group contains a carbonyl group (C double-bonded oxygen) linked to an alkyl group R; (R-C=O). In organic chemistry, the acyl group (IUPAC name: alkanoyl) is usually derived from a carboxylic acid, it has the formula RCO-, where R represents an alkyl group that is linked to the carbon atom of the C=O group by a single bond. As used herein, the alkanoyl group is referred to by the name of the corresponding anion that is the conjugated base of an acid. For example, a C4 acyl group (CH₃-CH₂-CH₂-C(O)-) is referred to as butyrate or C4:0, wherein the "4" indicates the total number of carbon atoms in the group and the ":0" the number of unsaturated carbon-carbon bonds. Likewise, C16:0 is referring to palmitic acid ( CH₃(CH2)₁₄COOH) and palmitate to CH₃(CH₂)₁₄CO.

The lipid fraction in the composition for use of the current invention may comprise a mixture of different fats and oils, such as a mixture of plant oils and milk fat. Optionally long chain poly unsaturated fatty acids (LC-PUFA) such as in one embodiment selected from the group consisting of DHA, ARA, and EPA may be added to the lipid fraction; preferably the composition comprises DHA, ARA and EPA. Such LC-PUFA are present in fish oil. It is understood that the fish oil may be replaced by any other source of poly unsaturated fatty acid (PUFA) source that provides docosahexaenoic acid (DHA), Eicosapentaenoic acid (EPA), and optionally arachidonic acid (ARA).

In one embodiment, the the content in gram fat per 100 kcal in the composition of the invention is between 3.5 and 6.0, preferably between 3.6 and 5.5, more preferably between 3.7 and 5.0.

The lipid fraction in the synthetic composition of the invention preferably comprises at least 0.2 wt% of butyrate as determined to the total amount of fatty acids in the lipid fraction, preferably at least 0.5 wt%, more preferably at least 1.0 wt%, particularly preferably at least 1.5 wt%, most preferably at least 1.8 wt%; further the amount of butyrate (C4:0) linked to sn-1,3 is more than 70% of the total amount of butyrate, preferably more than 80%, more preferably more than 90%.

In another embodiment, the lipid fraction in the synthetic composition of the invention comprises at least 0.5 wt% of butyrate, and further the amount butyrate linked to sn-1,3 is more than 70% of the total amount of butyrate, preferably more than 80%, more preferably more than 90%. Preferably, in another embodiment, the lipid fraction in the synthetic composition of the invention comprises at least 1.0 wt% butyrate, and further the amount of butyrate linked to sn-1,3 is more than 70% of the total amount of butyrate, preferably more than 80%, more preferably more than 90%. More preferably, in another embodiment, the lipid fraction in the synthetic composition of the invention comprises at least 1.5 wt% of butyrate, and further the amount of butyrate linked to sn-1,3 is more than 70% of the total amount of butyrate, preferably more than 80%, more preferably more than 90%. Even more preferably, in another embodiment, the lipid fraction in the synthetic composition of the invention comprises at least 1.8 wt% of butyrate, and further the amount of butyrate linked to sn-1,3 is more than 70% of the total amount of butyrate, preferably more than 80%, more preferably more than 90%.

In one embodiment, the fat fraction of the composition of the invention comprises milk fat and the amount of milk fat as determined with respect to the total amount of fat in the composition of the invention is at least 10 wt%, preferably at least 20 wt%, more preferably at least 30 wt%, even more preferably at least 40 wt%, most preferably at least 50 wt%.

In still another embodiment, the amount of vegetable oil as determined with respect to the total amount of fat in the synthetic composition of the invention is at least 10 wt%, preferably at least 20 wt%, more preferably at least 30 wt%, most preferably at least 40 wt%.

In one embodiment, the amount of milk fat as determined with respect to the total amount of fat in the composition of the invention is at least 10 wt%, and the amount of vegetable oil as determined with respect to the total amount of fat in the synthetic composition of the invention is at least 10 wt%, preferably at least 20 wt%, more preferably at least 30 wt%, most preferably at least 40 wt%.

In one embodiment, the amount of milk fat as determined with respect to the total amount of fat in the composition of the invention is at least 30 wt%, and the amount of vegetable oil as determined with respect to the total amount of fat in the synthetic composition of the invention is at least 10 wt%, preferably at least 20 wt%, more preferably at least 30 wt%, most preferably at least 40 wt%.

In one embodiment, the amount of milk fat as determined with respect to the total amount of fat in the composition of the invention is at least 40 wt%, and the amount of vegetable oil as determined with respect to the total amount of fat in the synthetic composition of the invention is at least 10 wt%, preferably at least 20 wt%, more preferably at least 30 wt%, most preferably at least 40 wt%.

In yet another embodiment, the amount of milk fat as determined with respect to the total amount of fat in the composition of the invention is at least 50 wt%, and the amount of vegetable oil as determined with respect to the total amount of fat in the synthetic composition of the invention is at least 10 wt%, preferably at least 20 wt%, more preferably at least 30 wt%, most preferably at least 40 wt%.

Mixtures of milk fat and vegetable oils are preferred as these may better resemble human milk fat in the fatty acid composition and the distribution of these fatty acids on the triacylglycerol (TAG) molecule. So in one embodiment the fat fraction comprises milk fat and vegetable oils, preferably wherein the amount of milk fat as determined with respect to the total amount of fat is at least 10 wt%. Vegetable oils for human consumption are well known in the art and include one or more of sunflower oil, palm oil, and rape seed oil.

Suitable milk fat for the composition of the invention is mammalian milk fat. Preferably milk fat from a ruminant, more preferably wherein the milk fat is selected from the group consisting of cow's milk fat, sheep milk fat, goat milk fat, camel milk fat, and horse milk fat; even more preferably from bovine milk fat or goat milk fat; most preferably bovine milk fat, particularly preferably cow's milk fat. The milk fat may be obtained from different milk fractions such as whole milk, cream, butter, anhydrous milk fat and the like. The term "ruminant milk fat" as used in this connection refers to a source of milk fat from milk of ruminants, preferably bovine milk fat. The milk fat source can in principle be any available ruminant milk fat source, such as whole milk, cream, anhydrous milk fat (AMF) or milk fat fractions resulting from dry fractionation, critical CO₂ extraction or other fractionation methods known in the art. It was, however, found particularly suitable to use whole milk and/or cream as the milk fat source.

Preferably the ruminant milk fat is bovine milk fat and the fat is selected from the group consisting of whole milk, cream, and anhydrous milk fat (AMF). More preferably, the bovine is a cow. In one embodiment the milk fat is bovine whole milk or cream. In one embodiment, the ruminant milk fat is bovine whole milk, in another embodiment the ruminant milk fat is bovine cream, in still another embodiment the ruminant milk fat is bovine AMF.

The carbohydrate fraction of the composition of the invention, which has a carbohydrate content in g/100 ml of 6.2 or higher, is referring to the amount of digestible carbohydrates such as lactose, sucrose, maltodextrin, glucose and maltose. Preferred digestible carbohydrates are lactose, maltodextrin and glucose. Dietary fibres like GOS, FOS, inulin and HMOs are non-digestible carbohydrates. In one embodiment the the carbohydrate content in the composition of the invention in gram carbohydrate per 100 kcal is between 9.0 and 15.0; preferably between 10 and 14, more preferably between 11 and 13.

In one preferred embodiment, the nutritional composition of the invention is an infant formula for an infant of 0 to 4 months old, preferably 0 to 3 months, more preferably 0 to 2 months old.

In another embodiment the composition of the invention is a synthetic composition.

In still another embodiment the synthetic nutritional product is a complete nutritional product, preferably an infant formula product such as a neonatal food product or an infant formula product. Preferably, the product is an infant formula product.

The composition of the invention may further comprise vitamins and minerals. Addition of levels and types of vitamins and minerals depends on the type of product and is known to the person skilled in the art. So in one embodiment the composition of the invention is further comprising one or more of minerals, vitamins, probiotics and/or prebiotics, preferably wherein the composition is comprising galactooligosaccharides (GOS) and human milk oligosaccharides. More preferably wherein the composition is comprising 2'FL (2'fucosyl lactose), even more preferably 2'FL and 3'GL (3'galactosyl lactose).

In one embodiment, the energy content of the composition of the invention is at least 40 kcal/100ml and/or at least 340 kcal per 100 g of powder. Alternatively, it is at least 42 kcal/100ml and/or at least 356 kcal per 100 g of powder, preferably at least 44 kcal/100ml and/or at least 373 kcal per 100 g of powder.

In another aspect the invention relates to an age-tailored nutrition system for an infant from birth to 6 months comprising two or more formula products wherein the first formula product is a nutritional composition according to the invention and wherein the first formula product is for feeding the infant for at least part of the first 3 months, preferably of the first 2 months and the second formula product is for feeding the infant for at least part of the remainder of the 6 months and wherein the energy content of the second nutritional formula is higher than the energy content of the first nutritional product, preferably wherein the energy content of the second nutritional formula is 58 kcal per 100 ml or higher, more preferably wherein the energy content of the second nutritional formula is 60 kcal per 100 ml or higher such as 61 kcal per 100 ml or higher.

The composition or age-tailored nutrition system of the invention may be used in the prevention of obesity and/or reducing the risk of obesity later in life such as at an age of 3 years or at 10 years old. Preferably later in life is referring to an age of 20 years, or 40 years old. It is expected that the satiety programming in the firsts months of life are effective for the whole life of a subject and hence prevention and/or reduction of the risk of obesity is expected during adulthood of the subject.

Since obesity relates to an abnormal or excessing fat accumulation in the body, a lower risk of obesity later in life helps in improving the body composition. So in one embodiment the composition or age-tailored nutrition system of the invention may be used in improving the body composition, the improvement of body composition being selected from the group consisting of increased lean body mass relative to total body mass, decreased fat mass relative to total body weight.

Disclosed, but not part of the present invention, is the use of a composition of the invention and/or of the nutrition system of the invention for the manufacture of a medicament for improving the body composition, and/or for preventing obesity, and/or reducing the risk of obesity later in life.

In still another aspect the composition and system of the present invention may be used in a method of feeding a human subject comprising the step of administering a nutritional composition according to the invention, or comprising the step of administering the age-tailored nutrition system of the invention to the subject, preferably wherein the human subject is between 0 and 12 months old, more preferably wherein the subject is between 0-6 months old.

It is also to be understood that this invention is not limited to the specific embodiments and methods described herein, as specific components and/or conditions may, of course, vary. Furthermore, the terminology used herein is used only for the purpose of describing particular embodiments of the present invention and is not intended to be limiting in any way.

The invention is hereinafter illustrated with reference to the following, non-limiting, examples.

### Examples

### Physiological model

The inventors noted that legislation around infant nutrition is steered by amounts of nutrients per 100 kcal and amounts of kcal per 100 ml, and amounts of kcal per day. It is not steered by ml of liquid per day like ml of water per day. This differs from the amount of nutrients per 100 ml in human breast milk because this level of nutrients per 100ml in breast milk varies with temperature. For example there is a 42% reduction in the fat content of Bedouin women breast milk going from Winter to Summer breast milk. Likewise the lactose content increases with 12%, as shown in Table 1.

**Table 1. Milk, water, lactose, and fat content in Bedouin women**

| (source Yagil et al Journal of Arid Environments 1986, 11, pp 243-247) | | | |
|---|---|---|---|
| | **Winter *(n*** = **80)** | **Summer *(n*** = **80)** | **% change** |
| Water % | 85 | 88 | +4 * |
| Lactose *(g*/*l)* | 57 | 64 | +12 ** |
| Fat % | 3.8 | 2.2 | -42 *** |
| *p = 0.01; | ***p* = 0.005; | ****p* = 0.001. | |

A similar trend was observed in cow's milk. (Yagil et al Journal of Arid Environments 1986, 11, pp 243-247).

Even under mild weather condition, bottle-fed infants often do not reach adequate water intake levels as illustrated by a Nutri-Bébé cross-sectional survey of 2013 (Chouraqui et al 2018; Public Health Nutrition: 21(3), 502-514). Herein, the total water intake (TWI) was assessed in ~1200 non-breastfed children aged 0.5 - 35 months in the winter of 2013. It was compared with adequate intake (AI) as set by EFSA. Among infants, 90 % had a ratio of water:energy below the AI, similarly for about 75 % of toddlers. The study shows strong discrepancies between actual and recommended water intakes in young children (Chouraqui, J., Thornton, S., Seconda, L., & Kavouras, S. (2022). Total water intake and its contributors in infants and young children. British Journal of Nutrition, 128(3), 531-541. doi:10.1017/S0007114521003469).

The WHO Guideline for infants 6-12 months: Non-breastfed infants and young children need at least 400-600 mL/day of extra fluids (in addition to the 200-700 mL/day of water that is estimated to come from milk and other foods) in a temperate climate, and 800-1200 mL/day in a hot climate. Plain, clean (boiled, if necessary) water should be offered several times per day to ensure that the infant's thirst is satisfied. (WHO 2005 - Guiding principles for feeding non-breastfed children 6-24 months of age. https://apps.who.int/ at iris/bitstream/ handle/ 10665/43281/9241593431.pdf)

As such it was concluded that formula feeding has a risk of overfeeding when infants only need to quench thirst.

This effect is also seen with bottled breast milk as shown by Azad *et al.* They conclude that breastfeeding is inversely associated with weight gain velocity and BMI. These associations are dose dependent, partially diminished when breast milk is fed from a bottle, and substantially weakened by formula supplementation after the neonatal period. (M. B. Azad et al Infant Feeding and Weight Gain: Separating Breast Milk From Breastfeeding and Formula From Food. Pediatrics October 2018; 142 (4): e20181092. 10.1542/peds.2018-1092). Without being bound to any particular theory the inventors belief that this is an effect of thirst-led consumption by the infant. In order to substantiate this, an infant physiological model was created to calculate the water requirement (also referred to as water loss) of an infant aged 0-12 months because such a model was not yet available. It was based upon the HumMod (hummod.org) model: the HumMod model which covers humans of 1 year and older was extended to cover infants aged 0-12 months. As input parameters the temperature (degrees Centigrade), the Relative Humidity (%), air pressure (mBar), infant age (weeks) and infant weight (kg) were used to calculate the respiratory water loss (via the lungs, RespWL), Sweat water loss (SWL), Trans Epidermal water loss (TEWL), Renal water loss (urine, RWL) and fecal water loss (FWL). The water loss per day is the sum of RespWL, SWL, TEWL, RWL, and FWL. See Figure 1.

The calory intake per day of the infant at different ages was taken from legislation and was kept similar to existing infant formula. The amount of mono-valent ions per 100 mL was also kept similar to existing infant formula.

The model assumes that the infant is only fed infant formula and that the infant formula is the only source of liquid received by the infant which is in accordance with nutritional recommendations for infants of 0-6 months old.

Using this model, the water loss (in mL per day) was calculated for infant in different cities. For each of these cities the outdoor temperature was used as input for the simulation. Outdoor temperature data was optionally combined with indoor temperature information and used as an additional input parameter. The outdoor temperature data was obtained from openweathermap.org which provides historic temperature data for + 37,000 cities. Average outdoor temperatures per day per city were calculated based on historic data of 6 years.

Due to the dependence of the temperature on the seasonality e.g.. hot during the Summer, colder in the Winter, a simulation was calculated assuming the infant was born in different months of the year. This was compared with the infant formula intake of 830 mL per day according to instructions given with formula instructions.

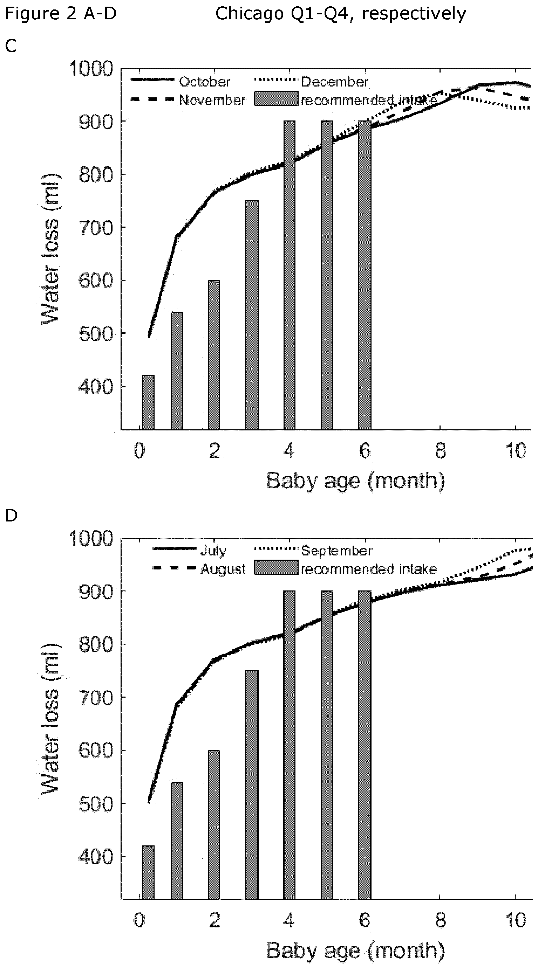

This comparison revealed an systematic overconsumption of IFT product to accommodate the water needs of the infant (i.e. total water loss) during the first months of life, especially the first 0-6 months, preferably the first 0-4 months of life, more preferably the first 3 (e.g. 0-3) months of life independently from the month of birth. Surprisingly the overconsumption was present in all climatological areas. This is shown in Figures 2 to 4. The water needs of an infant appeared to be independent of the indoor temperature.

Data for Chicago (USA), are shown in Figure 2 A - D, where each figure shows the recommended water intake (gray bar) per day (i.e. amount of ml of infant formula based on manufactures' instructions) and the water need, as determined based on the extended HumMod model. Figure 2A shows data for infants born in January, February and March, B) April, May, June, C) July, August, September and D) October, November and December. Chicago has a Dfa type of climate according to the Köppen system (Hot-summer humid continental climate). It is clear from these figures that the month of birth has little influence on the difference between the water need. Especially in the first four months of life the water need is significantly higher than the amount of infant formula provided according to manufacturers' instructions. This result in infants being thirsty and hence desiring more formula. This is considered a thirst-led consumption of infant formula resulting in the infant receiving more nutrients than required.

Similar results were obtained for Sydney (Australia) - humid subtropical climate; Cfa classification according to the Köppen Climate Classification - and Thessaloniki (Greece) as shown in Figure 3A-D, and Figure 4 A-D, respectively.

The simulation reveals that infants require about 200 ml of water in addition to the amount of liquid received via the infant formula per day. To compensate for this need for liquid, the infant will drink more formula and thereby receive more nutrients and calories than required.

This simulation also reveals that this result is independent on the outdoor temperature being hot like a summer in Sydney or cold like a winter in Chicago.

### Example with illustrative compositions according to the invention

This example shows the macronutrient levels of an average stage 1 infant formula and of 3 compositions according to the invention.

For the calculations in this example, it is assumed that
- 13.0 g of powder of the reference product is dissolved in 90 ml of water;
- 830 ml ready to drink Reference product is consumed per day;
- 1056 ml ready to drink product of the invention is consumed per day.

The Reference product is an average composition of 3 commercial stage 1 infant formulas. Example 1, 2, and 3 are compositions according to the invention (Table 2) .

**Table 2 Nutrients in reference and compositions according to the invention.**

| **Identifier** | **Unit** | **Reference** | **Example** | | |
|---|---|---|---|---|---|
| | | | **1** | **2** | **3** |
| **Nutrients per day** | | | | | |
| Energy (kcal) | kcal | 547 | 547 | 547 | 547 |
| Energy (kJ) | kJ | 2287 | 2287 | 2287 | 2287 |
| Protein (N*6.25) | 9 | 12 | 12.3 | 15.6 | 12.3 |
| Fat | 9 | 29 | 21.9 | 20.4 | 29.0 |
| Carbohydrates | 9 | 58 | 73.1 | 73.1 | 57.7 |
| Fibre | 9 | 3 | 3.0 | 3.0 | 3.0 |
| Sodium | mg | 186 | 235 | 235 | 235 |
| Potassium | mg | 651 | 824 | 824 | 824 |
| Chloride | mg | 372 | 471 | 471 | 471 |
| Other nutrients | 9 | 2 | 2.4 | 2.4 | 2.4 |
| Total solids | 9 | 106 | 114.3 | 116.0 | 105.9 |

| **Nutrients per 100 kcal** | | | | | |
|---|---|---|---|---|---|
| Protein (N*6.25) | 9 | 2.2 | 2.25 | 2.85 | 2.25 |
| Fat | 9 | 5.3 | 4.01 | 3.73 | 5.30 |
| Carbohydrates | 9 | 10.6 | 13.4 | 13.4 | 10.6 |
| Fibre | 9 | 0.6 | 0.55 | 0.55 | 0.55 |
| Sodium | mg | 34 | 43 | 43 | 43 |
| Potassium | mg | 119 | 151 | 151 | 151 |
| Chloride | mg | 68 | 86 | 86 | 86 |
| Energy per 100 ml | kcal | 66 | 53 | 53 | 53 |
| | | | | | |

| **Nutrients per 100 g powder** | | | | | |
|---|---|---|---|---|---|
| Protein (N*6.25) | 9 | 11 | 10.5 | 13.1 | 11.3 |
| Fat | 9 | 27 | 18.7 | 17.1 | 26.7 |
| Carbohydrates | 9 | 53 | 62.4 | 61.4 | 53.1 |
| Fibre | 9 | 3 | 2.6 | 2.5 | 2.8 |
| Other nutrients | 9 | 2 | 2.1 | 2.0 | 2.2 |
| **Total solids** | **9** | **97.5** | **97.5** | **97.5** | **97.5** |
| | | | | | |
| Sodium | mg | 172 | 201 | 198 | 217 |
| Potassium | mg | 601 | 703 | 693 | 758 |
| Chloride | mg | 344 | 402 | 396 | 434 |

| **Nutrients per 100 ml** | | | | | |
|---|---|---|---|---|---|
| **Identifier** | **Unit** | **Reference** | **Example** | | |
| | | | **1** | **2** | **3** |
| Protein (N*6.25) | 9 | 1.5 | 1.2 | 1.5 | 1.2 |
| Fat | 9 | 3.5 | 2.1 | 1.9 | 2.7 |
| Carbohydrates | 9 | 6.9 | 6.9 | 6.9 | 5.5 |
| Fibre | 9 | 0.4 | 0.3 | 0.3 | 0.3 |
| Other nutrients | 9 | 0.3 | 0.2 | 0.2 | 0.2 |
| Total solids | 9 | 12.7 | 10.8 | 11.0 | 10.0 |
| Energy | kcal | 66 | 52 | 52 | 52 |
| | | | | | |
| Sodium | mg | 22 | 22 | 22 | 22 |
| Potassium | mg | 78 | 78 | 78 | 78 |
| Chloride | mg | 45 | 45 | 45 | 45 |
| | | | | | |

| **Energy from** | | | | | |
|---|---|---|---|---|---|
| Fat | | 47% | 35.5% | 33.0% | 46.9% |
| Protein | | 9% | 9.2% | 11.6% | 9.2% |
| Carbohydrates | | 43% | 54.3% | 54.3% | 42.9% |
| Fibre | | 1% | 1.1% | 1.1% | 1.1% |
| | | | | | |
| PRSL (liquid) | | 101.3 | 88.9 | 101.3 | 88.9 |
| Protein | | 59.1 | 46.6 | 59.1 | 46.6 |
| Monovalent ions | | 42.2 | 42.2 | 42.2 | 42.2 |

## Claims

1. A synthetic nutritional composition comprising a protein fraction, a fat fraction and a carbohydrate fraction wherein the nutritional composition is a liquid or a powder that may be reconstituted with water into an oil-in-water emulsion, wherein the nutritional composition in its ready-to-drink form has an energy content per 100 ml of less than 48 kcal, most preferably less than 46 kcal, wherein the composition is
a. for infants weighing 3.0 kg or more; and
b. has a carbohydrate content in g/100 mL of 6.2 or higher.

2. The nutritional composition of claim 1 , wherein the energy content per 100 g of powder is less than 467 kcal, preferably less than 450 kcal, particularly preferably less than 442 kcal, more preferably less than 424 kcal, even more preferably less than 408 kcal, most preferably less than 390 kcal.

3. The nutritional composition of any of the preceding claims wherein the energy content is at least 40 kcal/100ml.

4. The nutritional composition of any of the preceding claims wherein the energy content is at least 340 kcal per 100 g of powder.

5. The nutritional composition of any of the preceding claims, wherein the protein content in gram protein per 100 kcal is between 1.6 and 3.0; or wherein the protein content in gram per 100 mL is more than 1 g; or wherein the protein content in gram protein per 100 kcal is between 1.6 and 3.0, and wherein the protein content in gram per 100 mL is more than 1 g.

6. The nutritional composition of any of the preceding claims, wherein the fat content in gram fat per 100 kcal is between 3.5 and 6.0.

7. The nutritional composition of any of the preceding claims, wherein the carbohydrate content in gram carbohydrate per 100 kcal is between 9.0 and 15.0.

8. The nutritional composition of any of the preceding claims, wherein the protein fraction comprises a mixture of whey and casein in a ratio of between 100:0 to 20:80, preferably a whey to casein ratio of between 70:30 and 20:80.

9. The nutritional composition of any of the preceding claims, wherein the nutritional composition is an infant formula for an infant of 0 to 4 months old.

10. The nutritional composition of any of the preceding claims, wherein the fat fraction comprises milk fat and vegetable oils, preferably wherein the amount of milk fat as determined with respect to the total amount of fat is at least 10 wt%.

11. The nutritional composition of any of the preceding claims, wherein the composition is further comprising one or more of minerals, vitamins, probiotics and/or prebiotics, preferably wherein the composition is comprising galactooligosaccharides (GOS) and human milk oligosaccharides.

12. An age-tailored nutrition system for an infant from birth to 6 months comprising two or more formula products wherein the first formula product is a nutritional composition according to anyone of claims 1 to 10 and wherein the first formula product is for feeding the infant for at least part of the first 3 months, preferably the first 2 months, and the second formula product is for feeding the infant for at least part of the remainder of the 6 months and wherein the energy content of the second nutritional formula is higher than the energy content of the first nutritional product, preferably wherein the energy content of the second nutritional formula is 58 kcal per 100 ml or higher.

13. The composition of anyone of claims 1 to 10 or the age-tailored nutrition system of claim 11 for use in the prevention of obesity and/or reducing the risk of obesity later in life.

14. Process for the manufacture of a nutritional composition according to anyone of claims 1 to 11comprising the steps of
i. preparing an aqueous phase comprising protein and digestible carbohydrates and preparing a fat phase comprising lipids, wherein the fatty acid composition of the lipid comprises linoleic acid and alpha- linolenic acid in a weight ratio of 2 to 10,
ii. mixing the fat and aqueous phase and homogenizing the mixture of fat and aqueous phase into an oil-in- water emulsion
iii. optionally drying the oil-in-water emulsion of ii. into a powder.

## Patentansprüche

1. Synthetische Nahrungszusammensetzung umfassend eine Proteinfraktion, eine Fettfraktion und eine Kohlenhydratfraktion, wobei die Nahrungszusammensetzung eine Flüssigkeit oder ein Pulver ist, das mit Wasser zu einer Öl-in-Wasser-Emulsion rekonstituiert werden kann, wobei die Nahrungszusammensetzung in ihrer trinkfertigen Form einen Energiegehalt pro 100 ml von weniger als 48 kcal, höchst bevorzugt weniger als 46 kcal, aufweist, wobei die Zusammensetzung
a. für Säuglinge mit einem Gewicht von 3,0 kg oder mehr ist; und
b. einen Kohlenhydratgehalt in g/100 ml von 6,2 oder höher aufweist.

2. Nahrungszusammensetzung nach Anspruch 1, wobei der Energiegehalt pro 100 g Pulver weniger als 467 kcal, vorzugsweise weniger als 450 kcal, besonders bevorzugt weniger als 442 kcal, bevorzugter weniger als 424 kcal, noch bevorzugter weniger als 408 kcal, höchst bevorzugt weniger als 390 kcal, beträgt.

3. Nahrungszusammensetzung nach einem der vorstehenden Ansprüche, wobei der Energiegehalt wenigstens 40 kcal/l00ml beträgt.

4. Nahrungszusammensetzung nach einem der vorstehenden Ansprüche, wobei der Energiegehalt wenigstens 340 kcal pro 100 g Pulver beträgt.

5. Nahrungszusammensetzung nach einem der vorstehenden Ansprüche, wobei der Proteingehalt in Gramm Protein pro 100 kcal zwischen 1,6 und 3,0 beträgt; oder wobei der Proteingehalt in Gramm pro 100 ml mehr als 1 g beträgt; oder wobei der Proteingehalt in Gramm Protein pro 100 kcal zwischen 1,6 und 3,0 beträgt und wobei der Proteingehalt in Gramm pro 100 ml mehr als 1 g beträgt

6. Nahrungszusammensetzung nach einem der vorstehenden Ansprüche, wobei der Fettgehalt in Gramm Fett pro 100 kcal zwischen 3,5 und 6,0 beträgt.

7. Nahrungszusammensetzung nach einem der vorstehenden Ansprüche, wobei der Kohlenhydratgehalt in Gramm Kohlenhydrat pro 100 kcal zwischen 9,0 und 15,0 beträgt.

8. Nahrungszusammensetzung nach einem der vorstehenden Ansprüche, wobei die Proteinfraktion ein Gemisch aus Molke und Casein in einem Verhältnis zwischen 100:0 und 20:80, vorzugsweise einem Molke-zu-Casein-Verhältnis zwischen 70:30 und 20:80, umfasst.

9. Nahrungszusammensetzung nach einem der vorstehenden Ansprüche, wobei die Nahrungszusammensetzung eine Säuglingsnahrung für ein Kind im Alter von 0 bis 4 Monaten ist.

10. Nahrungszusammensetzung nach einem der vorstehenden Ansprüche, wobei die Fettfraktion Milchfett und pflanzliche Öle umfasst, vorzugsweise wobei die Menge an Milchfett, wie bezogen auf die Gesamtmenge an Fett bestimmt, wenigstens 10 Gew.-% beträgt.

11. Nahrungszusammensetzung nach einem der vorstehenden Ansprüche, wobei die Zusammensetzung ferner eines oder mehrere von Mineralstoffen, Vitaminen, Probiotika und/oder Präbiotika umfasst, wobei die Zusammensetzung vorzugsweise Galactooligosaccharide (GOS) und menschliche Milcholigosaccharide umfasst.

12. Altersgerechtes Ernährungssystem für ein Kind von Geburt bis 6 Monate, umfassend zwei oder mehr Formulierungsprodukte, wobei das erste Formulierungsprodukt eine Nahrungszusammensetzung nach einem der Ansprüche 1 bis 10 ist und wobei das erste Formulierungsprodukt zur Ernährung des Säuglings für wenigstens einen Teil der ersten 3 Monate bestimmt ist, vorzugsweise die ersten 2 Monate, und das zweite Formulierungsprodukt zur Ernährung des Säuglings für wenigstens einen Teil des Rests der 6 Monate bestimmt ist und wobei der Energiegehalt der zweiten Ernährungsformulierung höher ist als der Energiegehalt des ersten Ernährungsprodukts, vorzugsweise wobei der Energiegehalt der zweiten Ernährungsformulierung 58 kcal pro 100 ml oder höher ist.

13. Zusammensetzung nach einem der Ansprüche 1 bis 10 oder altersgerechtes Ernährungssystem nach Anspruch 11 zur Verwendung bei der Prävention von Adipositas und/oder Verringerung des Risikos von Adipositas später im Leben.

14. Verfahren zur Herstellung einer Nahrungszusammensetzung nach einem der Ansprüche 1 bis 11, umfassend die Schritte von
i. Herstellen einer wässrigen Phase, die Protein und verdauliche Kohlenhydrate umfasst, und Herstellen einer Fettphase, die Lipide umfasst, wobei die Fettsäurezusammensetzung des Lipids Linolsäure und alpha-Linolensäure in einem Gewichtsverhältnis von 2 bis 10 umfasst,
ii. Mischen der Fett- und Wasserphase und Homogenisieren des Gemischs aus Fett und Wasserphase zu einer Öl-in-Wasser-Emulsion,
iii. gegebenenfalls Trocknen der Öl-in-Wasser-Emulsion von ii. zu einem Pulver.

## Revendications

1. Composition nutritionnelle synthétique comprenant une fraction protéique, une fraction grasse et une fraction glucidique, dans laquelle la composition nutritionnelle est un liquide ou une poudre qui peut être reconstituée avec de l'eau en une émulsion huile-dans-eau, dans laquelle la composition nutritionnelle sous sa forme prête à boire a une teneur énergétique Ar pour 100 ml inférieure à 48 kcal, de préférence encore inférieure à 46 kcal, dans laquelle la composition
a. est pour les nourrissons pesant 3,0 kg ou plus ; et
b. a une teneur en glucides en g/100 mL de 6,2 ou plus.

2. Composition nutritionnelle selon la revendication 1, dans laquelle la teneur en énergie pour 100 g de poudre est inférieure à 467 kcal, de préférence inférieure à 450 kcal, de manière particulièrement préférée inférieure à 442 kcal, de manière plus préférée inférieure à 424 kcal, encore plus préférablement inférieure à 408 kcal, de manière préférée entre toutes inférieure à 390 kcal.

3. Composition nutritionnelle selon l'une quelconque des revendications précédentes, dans laquelle la teneur en énergie est d'au moins 40 kcal/100 ml.

4. Composition nutritionnelle selon l'une quelconque des revendications précédentes, dans laquelle la teneur en énergie est d'au moins 340 kcal pour 100 g de poudre.

5. Composition nutritionnelle selon l'une quelconque des revendications précédentes, dans laquelle la teneur en protéines en grammes de protéine par 100 kcal est comprise entre 1,6 et 3,0 ; ou dans laquelle la teneur en protéines en grammes par 100 ml est supérieure à 1 g ; ou dans laquelle la teneur en protéines en grammes de protéine par 100 kcal est comprise entre 1,6 et 3,0 ; et dans laquelle la teneur en protéines en grammes par 100 ml est supérieure à 1 g.

6. Composition nutritionnelle selon l'une quelconque des revendications précédentes, dans laquelle la teneur en graisse en grammes de graisse pour 100 kcal est comprise entre 3,5 et 6,0.

7. Composition nutritionnelle selon l'une quelconque des revendications précédentes, dans laquelle la teneur en glucides en grammes de glucides pour 100 kcal est comprise entre 9,0 et 15,0.

8. Composition nutritionnelle selon l'une quelconque des revendications précédentes, dans laquelle la fraction protéique comprend un mélange de lactosérum et de caséine dans un rapport compris entre 100:0 et 20:80, de préférence un rapport lactosérum sur caséine compris entre 70:30 et 20:80.

9. Composition nutritionnelle selon l'une quelconque des revendications précédentes, dans laquelle la composition nutritionnelle est une formule pour nourrisson destinée à un nourrisson âgé de 0 à 4 mois.

10. Composition nutritionnelle selon l'une quelconque des revendications précédentes, dans laquelle la fraction grasse comprend de la graisse de lait et des huiles végétales, de préférence dans laquelle la quantité de graisse de lait telle que déterminée par rapport à la quantité totale de graisse est d'au moins 10 % en poids.

11. Composition nutritionnelle selon l'une quelconque des revendications précédentes, dans laquelle la composition comprend en outre un(e) ou plusieurs minéraux, vitamines, probiotiques et/ou prébiotiques, de préférence dans laquelle la composition comprend des galactooligosaccharides (GOS) et des oligosaccharides de lait humain.

12. Système de nutrition adapté à l'âge pour un nourrisson de la naissance à 6 mois, comprenant deux produits de préparation ou plus, dans lequel le premier produit de préparation est une composition nutritionnelle selon l'une quelconque des revendications 1 à 10 et dans lequel le premier produit de préparation est destiné à nourrir le nourrisson pendant au moins une partie des 3 premiers mois, de préférence des 2 premiers mois, et le second produit de préparation est destiné à nourrir le nourrisson pendant au moins une partie du reste des 6 mois et dans lequel la teneur en énergie de la seconde préparation nutritionnelle est supérieure à la teneur en énergie du premier produit nutritionnel, de préférence dans lequel la teneur en énergie de la seconde préparation nutritionnelle est de 58 kcal pour 100 ml ou plus.

13. Composition selon l'une quelconque des revendications 1 à 10 ou système de nutrition adapté à l'âge selon la revendication 11, destiné(e) à être utilisé(e) dans la prévention de l'obésité et/ou la réduction du risque d'obésité plus tard dans la vie.

14. Procédé de fabrication d'une composition nutritionnelle selon l'une quelconque des revendications 1 à 11, comprenant les étapes de
i. préparation d'une phase aqueuse comprenant des glucides digestibles et des protéines et préparation d'une phase grasse comprenant des lipides, dans lequel la composition d'acides gras du lipide comprend de l'acide linoléique et de l'acide alpha-linolénique dans un rapport pondéral de 2 à 10,
ii. mélange des phases grasse et aqueuse et homogénéisation du mélange de phases grasse et aqueuse en une émulsion huile-dans-eau
iii. optionnellement séchage de l'émulsion huile-dans-eau de ii. en une poudre.
